# EUROPÄISCHE PATENTSCHRIFT

(11) **EP 4 028 253 B1**
(45) Veröffentlichungstag und Bekanntmachung des Hinweises auf die Patenterteilung: **24.07.2024**
(21) Anmeldenummer: 20761791.1
(22) Anmeldetag: 24.08.2020
(51) Int. Cl.: B29D 30/06, B29D 30/72

(54) **KOMBINIERTES HERSTELLUNGSVERFAHREN FÜR EIN FORMWERKZEUG ZUR FORMGEBENDEN VULKANISATION EINES FAHRZEUGREIFENS SOWIE FAHRZEUGREIFEN**
COMBINED PRODUCTION METHOD FOR A MOULDING TOOL FOR THE MOULDING VULCANISATION OF A VEHICLE TYRE AND VEHICLE TYRE
PROCÉDÉ DE PRODUCTION COMBINÉE POUR UN OUTIL DE MOULAGE POUR LA VULCANISATION PAR MOULAGE D'UN PNEUMATIQUE DE VÉHICULE ET PNEUMATIQUE DE VÉHICULE

(30) Priorität: 11.09.2019 DE 102019213874
(43) Veröffentlichungstag der Anmeldung: 20.07.2022
(73) Patentinhaber: Continental Reifen Deutschland GmbH, 30175 Hannover (DE)
(72) Erfinder: JURCO, Juraj, 30165 Hannover (DE); RITTWEGER, Stefan, 30165 Hannover (DE)
(74) Vertreter: Continental Corporation
(86) Internationale Anmeldenummer: PCT/EP2020/073647
(87) Internationale Veröffentlichungsnummer: WO 2021/047897

(56) Entgegenhaltungen:
- EP-A1- 2 977 934
- EP-A2- 0 755 810
- WO-A1-00/09348
- WO-A1-2015/165863
- WO-A1-2018/065135
- DE-A1- 102013 223 567
- DE-A1- 102016 215 732
- US-A1- 2014 216 622
- US-A1- 2017 080 656

## Beschreibung

Die Erfindung betrifft ein Verfahren zur Herstellung eines Formwerkzeugs einer Vulkanisationsvorrichtung zum formgebenden Vulkanisieren eines Fahrzeugreifens, wobei das Formwerkzeug eine Negativkontraststruktur auf einer Formoberfläche des Formwerkzeugs aufweist. Weiter betrifft die Erfindung einen Fahrzeugreifen hergestellt mittels des Formwerkzeugs.

Eine derartige Negativkontraststruktur wird in der Regel im Zuge der Vulkanisation des Reifens mittels der Vulkanisierform formgebend in die Oberfläche des Reifens, insbesondere auf zumindest eine der Seitenwände des Reifens und/oder den Laufstreifen, geprägt. Die Oberfläche des Reifens weist somit eine zur Negativkontraststruktur komplementäre Positivkontraststruktur auf.

Derartige Positivkontraststrukturen sind bekannt. Auf der Reifenseitenwand und/oder auf dem Laufstreifen werden sie z.B. zur Darstellung einer Markierung genutzt. Eine Markierung kann dabei eine Abbildung, ein Schriftzeichen, ein maschinenlesbarer Code, einen Firmennamen, ein Firmenlogo, eine Kennzeichnung, eine Fläche, etc. umfassen. Die Positivkontraststruktur kann die Markierung ganz oder teilweise darstellen und/oder diese ganz oder teilweise umgeben.

Eine Positivkontraststruktur erzeugt dabei einen Kontrast zu nicht strukturierten oder anders strukturierten Oberflächenbereichen. Hierdurch können z.B. Markierungen besser sichtbar gemacht werden.

Die Negativkontraststruktur wird dabei üblicherweise mittels eines spanabtragenden Verfahrens auf der Formoberfläche eines Formwerkzeugs erzeugt. Der Nachteil derartig erzeugter Negativkontraststrukturen ist jedoch, dass die resultierende Positivkontraststruktur meist entweder nur eine begrenzte Kontrastwirkung aufweist oder aufwändig in der Formherstellung und späteren Handhabung in der Reifenproduktion, z.B. bzgl. Reinigung und Entlüftung, ist.

Die US 2012 0227879 A1 offenbart, eine Negativkontraststruktur eines Formwerkzeugs für Reifen durch Lasergravur bereitzustellen. Jedoch ist Lasergravur aufwändig.

Die US 2014 216 622 A1 offenbart ein Verfahren zur Herstellung einer Markierung eines Formwerkzeugs für Reifen, die durch eine Kombination von mechanischer Bearbeitung und Lasergravur erzeugt wird.

Aufgabe ist es somit, ein Verfahren zur Herstellung eines Formwerkzeugs aufweisend eine Negativkontraststruktur auf seiner Formoberfläche bereitzustellen, das bezüglich der Kontrastwirkung der Positivkontraststruktur am Reifen sowie der Herstellung des Formwerkzeugs verbessert ist.

Dies wird erreicht, indem das Verfahren zumindest die folgenden Schritte umfasst:
a) Bereitstellen des Formwerkzeugs aufweisend die Formoberfläche zum formgebenden Prägen einer Oberfläche eines Fahrzeugreifens im Zuge der Vulkanisation des Reifens mittels der Vulkanisationsvorrichtung,
b) Erzeugen einer ersten Oberflächenstruktur von ersten Vertiefungen mittels eines spanabtragenden Verfahrens, wobei sich die erste Oberflächenstruktur zumindest über einen Oberflächenbereich der Formoberfläche erstreckt,
c) Erzeugen einer zweiten Oberflächenstruktur von zweiten Vertiefungen mittels Lasergravur, wobei sich die zweite Oberflächenstruktur zumindest über den Oberflächenbereich erstreckt und wobei die erste Oberflächenstruktur und die zweite Oberflächenstruktur zusammen im Oberflächenbereich die Negativkontraststruktur bilden.

Das Verfahren kombiniert zwei unterschiedliche Herstellungsverfahren zur Erzeugung einer Negativkontraststruktur aufweisend erste und zweite Vertiefungen. Ein Fahrzeugreifen der durch formgebende Vulkanisation eines Reifenrohlings mit einer Vulkanisationsvorrichtung aufweisend ein derartiges Formwerkzeug hergestellt ist, weist auf seiner Oberfläche eine zur Negativkontraststruktur komplementäre Positivkontraststruktur auf. Die Positivkontraststruktur weist dabei zu den ersten Vertiefungen der Negativkontraststruktur komplementäre erste Erhebungen und zu den zweiten Vertiefungen der Negativkontraststruktur komplementäre zweite Erhebungen auf.

In Schritt b) werden die ersten Vertiefungen mittels eines üblichen spanabtragenden Verfahrens erzeugt. Dies kann z.B. durch Fräsen mittels eines Fräskopfes erfolgen. Hierdurch können besonders effizient einfache Strukturen, wie z.B. längliche Vertiefungen, die in einer Richtung ausgerichtet sind, erzeugt werden. Es kann sich z.B. um Schraffurrippen handeln, die bevorzugt weitgehend parallel zueinander geradlinig ausgerichtet sind. Allerdings sind die durch spanabtragende Verfahren effizient erzeugbaren Strukturen in ihrer Geometrie, z.B. durch die Breite und Flankenwinkel des Fräskopfes, sowie in der Ausrichtung, beschränkt. Der Querschnitt einer länglichen ersten Vertiefung kann z.B. durch die Geometrie des Fräskopfes bestimmt sein. Die ersten Vertiefungen können einander berührend oder voneinander beabstandet angeordnet sein. Die erste Oberflächenstruktur kann sich dabei genau über die Oberfläche erstrecken oder darüber hinaus.

In Schritt c) werden zweite Vertiefungen mittels Lasergravur erzeugt. Durch die Lasergravur kann die Geometrie, insbesondere z.B. die Wahl der Flankenwinkel von länglichen Vertiefungen, und/oder die Ausrichtung, insbesondere eine nicht-lineare Ausrichtung, der Vertiefungen, flexibler gewählt werden. Die zweiten Vertiefungen können einander berührend oder voneinander beabstandet angeordnet sein. Die zweite Oberflächenstruktur kann sich dabei genau über die Oberfläche erstrecken oder darüber hinaus.

Bei einer Lasergravur wird ein von einem Laser erzeugter Laserstrahl auf eine zu gravierende Oberfläche gerichtet. Die Gravur erfolgt mittels des durch den Laserstrahl bedingten Energieeintrags auf die Oberfläche. Hierzu werden Laserstrahl und Oberfläche in der Regel relativ zueinander bewegt, so dass der Laserstrahl abhängig von der zu gravierenden Struktur über die Oberfläche geführt wird. Hierzu kann eine Vorrichtung zur Führung des Laserstrahls zum Einsatz kommen. Durch Anpassung der Geschwindigkeit der Relativbewegung sowie Parametern des Laserstrahls, wie z.B. Intensität und/oder Fokus des Laserstrahls, können die resultierende gravierte Struktur als auch die Gravurzeit optimiert werden. Es kann sich um einen kontinuierlichen oder um einen gepulsten Laser handeln.

Durch die Kombination von Schritt b) und c) ist somit eine größere Flexibilität in der Erzeugung der Negativkontraststruktur ermöglicht und Strukturen, die im Positiv am Reifen eine verbesserte Kontrastwirkung erzielen, können vereinfacht realisiert werden. Gleichzeitig lässt sich die Herstellungszeit im Vergleich zur Herstellung einer entsprechenden Formoberfläche durch nur ein spanabtragendes Verfahren oder durch nur Lasergravur verkürzen. Somit lässt sich der Produktionsaufwand bei vorteilhafter Kontrastwirkung verringern.

Somit ist ein Verfahren zur Herstellung eines Formwerkzeugs aufweisend eine Negativkontraststruktur auf seiner Formoberfläche bereitgestellt, das bezüglich der Kontrastwirkung der Positivkontraststruktur am Reifen sowie der Herstellung des Formwerkzeugs verbessert ist.

Vorzugsweise ist das Formwerkzeug zumindest im Bereich der Formoberfläche aus Stahl gebildet. Die Formoberfläche kann zudem eine Beschichtung aufweisen. Stahl kann sowohl mittels spanabtragendem Verfahren als mittels Lasergravur bearbeitet werden. Gleichzeitig hat sich ein derartiges Formwerkzeug als sehr geeignet für die formgebende Vulkanisation einer Vielzahl von Reifen erwiesen.

Schritt b) kann dabei vor oder nach Schritt c) erfolgen. Bevorzugt erfolgt Schritt b) vor Schritt c).

Eine vorteilhafte Ausführungsform ist dadurch gegeben, dass in Schritt b) alle ersten Vertiefungen erzeugt werden und zeitlich und/oder räumlich beabstandet in Schritt c) alle zweiten Vertiefungen erzeugt werden.

Hierdurch lässt sich die Negativstruktur besonders effizient erzeugen, da die Herstellungsschritte b) und c) räumlich und/oder zeitlich beabstandet voneinander erfolgen können. Die Mittel zum spanabtragenden Verfahren sowie zur Lasergravur können somit räumlich und/oder zeitlich beabstandet voneinander zum Einsatz kommen und müssen nicht miteinander in einer Apparatur kombiniert werden.

Schritt b) kann dabei vor oder nach Schritt c) erfolgen. Bevorzugt erfolgt Schritt b) vor Schritt c).

Erfindugsgemäß ist vorgesehen, dass die zweiten Vertiefungen eine Oberfläche aufweisen, die eine größere, bevorzugt um einen Faktor 10 größere, besonders bevorzugt um einen Faktor 20 größere, Rautiefe aufweisen als eine Oberfläche der ersten Vertiefungen. Durch Lasergravur erzeugte Vertiefungen wie die zweiten Vertiefungen weisen in der Regel herstellungsbedingt eine größere Rautiefe auf als durch spanabtragende Verfahren erzeugte Vertiefungen wie die ersten Vertiefungen.

Die Rautiefe kann gemäß DIN EN ISO 4287:1998 ermittelt werden. Dabei ist die Rautiefe der arithmetische Mittelwert der Einzelrautiefen aufeinanderfolgender Einzelmessstrecken.

Die Einzelrautiefe ist dabei die maximale Höhendifferenz innerhalb einer Einzelmessstrecke.

Hierdurch kann ein durch die unterschiedlichen Herstellungsverfahren bedingter Unterschied in der Rautiefe der ersten und zweiten Vertiefungen erreicht werden. Entsprechend können dann auch die zweiten Erhebungen der komplementären Positivkontraststruktur am Reifen eine entsprechend größere Rautiefe aufweisen als die ersten Erhebungen. Hierdurch bedingt werden unterschiedliche Reflexionseigenschaften der ersten und zweiten Erhebungen ermöglicht.

Auch hierdurch kann durch die Kombination der beiden Verfahren zur Erzeugung der Vertiefungen die Kontrastwirkung der entsprechenden Positivkontraststruktur am Reifen gezielt beeinflusst werden.

Eine vorteilhafte Ausführungsform ist dadurch gegeben, dass zumindest eine erste Vertiefung eine längliche Form aufweist, bevorzugt dass zumindest eine erste Vertiefung eine Länge aufweist, die mindestens zweimal, besonders bevorzugt mindestens viermal, größer ist als die Breite der zumindest einen ersten Vertiefung. Am Reifen weist die zumindest eine komplementäre erste Erhebung der Positivkontraststruktur eine entsprechende Form auf.

Spanabtragende Verfahren eignen sich besonders zur effizienten Erzeugung von Vertiefungen mit einer länglichen Form. Hierbei kann das spanabtragende Werkzeug bei gleichbleibender Relativhöhe zur ursprünglichen Formoberfläche in einer bevorzugt geraden Linie über das Formwerkzeug geführt werden. Besonders effizient ist es dabei, wenn die erste Vertiefung eine Länge aufweist, die mindestens 4 mal größer ist als die Breite der ersten Vertiefung.

Die Breite und die Länge einer Vertiefung kann ermittelt sein auf halber Höhe der Vertiefung.

Zweckmäßig ist es, wenn mehrere, bevorzugt alle, ersten Vertiefungen eine derartige längliche Form aufweisen. Es kann sich bei ersten Vertiefungen länglicher Form um die Negativformen von Schraffurrippen handeln. Derartigen Schraffurrippen ermöglichen bei guter Herstellbarkeit eine gute Kontrastwirkung am Reifen. Zweckmäßig ist es, wenn mehrere erste Vertiefungen länglicher Form weitgehend parallel zueinander angeordnet sind.

Eine vorteilhafte Ausführungsform ist dadurch gegeben, dass zumindest eine zweite Vertiefung eine längliche Form aufweist, bevorzugt dass zumindest eine zweite Vertiefung eine Länge aufweist, die mindestens 2 mal, besonders bevorzugt mindestens 4 mal, größer ist als die Breite der zumindest einen zweiten Vertiefung. Am Reifen weist die zumindest eine komplementäre zweite Erhebung der Positivkontraststruktur eine entsprechende Form auf.

Auch mittels Lasergravur lassen sich effizient längliche Vertiefungen erzeugen. Zweckmäßig ist es, wenn mehrere, bevorzugt alle, zweiten Vertiefungen eine derartige längliche Form aufweisen. Es kann sich bei zweiten Vertiefungen länglicher Form um die Negativformen von Schraffurrippen handeln. Zweckmäßig ist es, wenn mehrere zweite Vertiefungen länglicher Form weitgehend parallel zueinander angeordnet sind.

Auch hierdurch ist eine vorteilhafte Kontrastwirkung der komplementären Positivkontraststruktur am Reifen ermöglicht.

Eine vorteilhafte Ausführungsform ist dadurch gegeben, dass die erste Struktur mehrere erste längliche Vertiefung und die zweite Struktur mehrere zweite längliche Vertiefungen aufweist und dass die ersten Vertiefungen und die zweiten Vertiefungen dabei weitgehend parallel zueinander, bevorzugt weitgehend parallel zueinander und alternierend, angeordnet sind. Die komplementäre Positivkontraststruktur am Reifen kann entsprechend ausgebildet sein.

Hierdurch ist eine besonders einfache Ausführungsform gegeben. Durch die Kombination der ersten Vertiefung mit der zweiten Vertiefung können die Vorteile beider Strukturen und ihrer Herstellungsmethoden trotz der einfachen Struktur zum Tragen kommen. So sind die erste Vertiefungen besonders effizient erzeugbar und die zweiten Vertiefungen können mittels Lasergravur beispielsweise mit einem geringem Flankenwinkel ausgeführt werden.

Hierdurch ist eine gezielte Beeinflussung der Kontrastwirkung der komplementären Positivkontraststruktur am Reifen bei gleichzeitig einfachen Strukturen ermöglicht.

Eine vorteilhafte Ausführungsform ist dadurch gegeben, dass zumindest eine erste längliche Vertiefung und zumindest eine zweite längliche Vertiefung einander kreuzend angeordnet sind.

Durch derartige Kreuzstrukturen ist eine besonders gute Kontrastwirkung bei gleichzeitiger Stützung der Positivkontraststruktur am Reifen sowie guter Entlüftbarkeit in der Reifenherstellung erreichbar. Es kann sein, dass bei der Erzeugung der als zweites erzeugten Vertiefung der beiden einander kreuzenden Vertiefungen der Materialabtrag nicht über die gesamte Länge der Vertiefung erfolgt, sondern im Kreuzungsbereich durch die bereits zuvor erzeugte andere Vertiefung der beiden einander kreuzenden Vertiefungen unterbrochen ist. Die so als zweites erzeugte Vertiefung kann somit im Kreuzungsbereich eine Unterbrechung aufweisen.

Eine vorteilhafte Ausführungsform ist dadurch gegeben, dass zumindest eine zweite Vertiefung eine Länge aufweist, die geringer ist als zweimal die Höhe der zweiten Vertiefung.

Durch Lasergravur sind derartig Vertiefungen leichter erzeugbar als mittels eines spanabtragenden Verfahrens. Zweckmäßig ist es, wenn mehrere oder alle der zweiten Vertiefungen derart ausgebildet sind.

Die komplementäre Positivkontraststruktur am Reifen weist vorteilhafte kurze zweite Erhebungen auf.

Eine vorteilhafte Ausführungsform ist dadurch gegeben, dass zumindest eine zweite Vertiefung in ihrer länglichen Erstreckung eine Krümmung oder einen Knick aufweist.

Durch Lasergravur sind derartig Vertiefungen mit nicht-linearer Erstreckung leichter erzeugbar als mittels eines spanabtragenden Verfahrens. Zweckmäßig ist es, wenn mehrere oder alle der zweiten Vertiefungen derart ausgebildet sind.

Die ersten Vertiefungen und die zweiten Vertiefungen können jeweils einander gegenüberliegende Flanken aufweisen, die einen Winkel miteinander einschließen. Dabei können die Flanken jeweils den gleichen Winkel miteinander einschließe. Sie können sich aber auch darin unterscheiden.

Hierdurch ist eine sehr flexible Einstellung der Kontrastwirkung der entsprechenden komplementären Positivkontraststruktur am Reifen ermöglicht.

Eine vorteilhafte Ausführungsform ist dadurch gegeben, dass zumindest eine erste Vertiefung einander gegenüberliegende Flanken aufweist, die einen Winkel von mindestens 50°, bevorzugt von 55° bis 65°, miteinander einschließen und dass zumindest eine zweite Vertiefung einander gegenüberliegende Flanken aufweist, die einen Winkel von 4° bis 30°, bevorzugt von 10° bis 20°, besonders bevorzugt von 12° bis 16°, miteinander einschließen.

Mittels eines spanabtragenden Verfahrens, wie z.B Fräsen, lassen sich besonders leicht Vertiefungen erzeugen, die einander gegenüberliegende Flanken aufweist, die einen Winkel von mindestens 50°, bevorzugt von 55° bis 65°, miteinander einschließen. Winkel von unter 50° hingegen sind nur mit größerem Aufwand erreichbar.

Mittels Lasergravur hingegen lassen sich auch geringere Winkel leichter erreichen. Insbesondere können einander gegenüberliegende Flanken erreicht werden, einen Winkel von 4° bis 30°, bevorzugt von 10° bis 20°, besonders bevorzugt von 12° bis 16°, miteinander einschließen.

Somit sind die Vorteile beider Verfahren miteinander kombiniert. Die erzeugbare Kontrastwirkung der komplementären Positivkontraststruktur ist durch die unterschiedlichen Winkel verbessert.

Zweckmäßig ist es, wenn mehrere oder alle der zweiten Vertiefungen und/oder ersten Vertiefungen derart ausgebildet sind.

Eine vorteilhafte Ausführungsform ist dadurch gegeben, dass die Höhe der zumindest einen ersten Vertiefung und/oder die Höhe der zumindest einen zweiten Vertiefung maximal 0,8 mm, bevorzugt maximal 0,6 mm, besonders bevorzugt maximal 0,4 mm, beträgt.

Eine derartige Negativkontraststruktur lässt sich mittels spanabtragendem Verfahren und Lasergravur effizient erzeugen. Gleichzeitig ermöglichen die geringen Abmessungen eine hervorragende Kontrastwirkung der komplementären Positivkontraststruktur. Die Höhe kann dabei gemessen sein relativ zur unbearbeiteten Formoberfläche des Oberflächenbereichs des Formwerkzeugs vor Schritt b).

Die Erfindung betrifft auch ein Formwerkzeug einer Vulkanisationsform zur formgebenden Vulkanisation eines Fahrzeugreifens, hergestellt gemäß dargelegtem Verfahren.

Die Erfindung betrifft auch einen Fahrzeugreifen hergestellt durch formgebende Vulkanisation eines Reifenrohlings mit einer Vulkanisationsvorrichtung aufweisend ein Formwerkzeug mit einer Negativkontraststruktur auf einem Oberflächenbereich einer Formoberfläche des Formwerkzeugs gemäß dem dargestellten Verfahren, wobei der Fahrzeugreifen auf seiner Oberfläche, insbesondere auf zumindest einer Seitenwand und/oder dem Laufstreifen, die zur Negativkontraststruktur komplementäre Positivkontraststruktur aufweist.

Die Positivkontraststruktur weist eine vorteilhafte Kontrastwirkung bei gleichzeitig verringertem Produktionsaufwand von Form und Reifen auf. Die Positivkontraststruktur kann zum Beispiel eine Markierung ganz oder teilweise darstellen oder diese ganz oder teilweise umgeben. Die Positivkontraststruktur weist dabei zu den ersten Vertiefungen der Negativkontraststruktur komplementäre erste Erhebungen und zu den zweiten Vertiefungen der Negativkontraststruktur komplementäre zweite Erhebungen auf. Die Geometrie und Anordnung sowie Oberflächenbeschaffenheit der auf der Formoberfläche erzeugten ersten und zweiten Vertiefungen bedingen somit die hierzu komplementäre Geometrie und Anordnung sowie Oberflächenbeschaffenheit der ersten und zweiten Erhebungen der Positivkontraststruktur.

Zweckmäßig ist es, wenn dabei die zweiten Erhebungen eine Oberfläche aufweisen, die eine größere, bevorzugt um einen Faktor 10 größere, besonders bevorzugt um einen Faktor 20 größere, Rautiefe aufweisen als eine Oberfläche der ersten Erhebungen. Die Rautiefe kann gemäß DIN EN ISO 4287:1998 ermittelt werden. Hierdurch kann ein durch die unterschiedlichen Herstellungsverfahren bedingter Unterschied in der Rautiefe der ersten und zweiten Erhebungen erreicht werden, wodurch die Kontrastwirkung gezielt beeinflussbar ist.

Zweckmäßig ist es, wenn der Reifen ein Fahrzeugluftreifen ist. Es kann sich um einen Fahrzeugluftreifen für ein Fahrrad, für einen Personenkraftwagen, einen Van, ein SUV, einen Light-Truck, ein Nutzfahrzeug, ein Kraftrad oder einen Bus handeln. Besonders bevorzugt handelt es sich um einen Fahrzeugluftreifen für einen Personenkraftwagen. Derartige Fahrzeugluftreifen weisen in der Regel eine geringere Seitenwandhöhe auf als die anderen genannten Fahrzeugluftreifen. Hierdurch ist der Platz für die Anbringung von Zeichen wie Schrift oder bildliche Darstellungen in der Regel begrenzt. Für eine gute Lesbarkeit und/oder Erkennbarkeit ist somit eine hohe Kontrastwirkung besonders vorteilhaft.

Eine vorteilhafte Ausführungsform ist dadurch gegeben, dass der Fahrzeugreifen mehrere Flächen aufweisend die Kontraststrukturen aufweist, wobei die Flächen derart angeordnet sind, dass sie einen maschinenlesbaren Code, bevorzugt einen zweidimensionalen Code, besonders bevorzugt einen QR-Code, darstellen.

Aufgrund der hervorragenden Kontrastwirkung der Positivkontraststruktur bei gleichzeitig vorteilhafter Herstellbarkeit des formgebenden Mittels eignet sich eine solche Anordnung hervorragend zur Darstellung eines maschinenlesbaren Codes, insbesondere zur Darstellung der üblicherweise dunkel dargestellten Flächen des Codes. Die üblicherweise hell dargestellten Flächen des Codes können durch eine weitgehend unbearbeitete Oberfläche bzw. im Vergleich zur Positivkontraststruktur glatte Oberfläche des Fahrzeugreifens ausgebildet sein.

Weitere Merkmale, Vorteile und Einzelheiten der Erfindung werden nun anhand der schematischen Zeichnungen, die Ausführungsbeispiele darstellen, näher erläutert. Dabei zeigt die
- Fig. 1: einen Fahrzeugluftreifen aufweisend eine Positivkontraststruktur;
- Fig. 2: ein Formwerkzeug nach Schritt b);
- Fig. 3: das Formwerkzeug nach Schritt c);
- Fig. 4: ein mittels des Formwerkzeugs hergestellten Fahrzeugluftreifen;
- Fig. 5: eine Draufsicht auf ein Formwerkzeug.

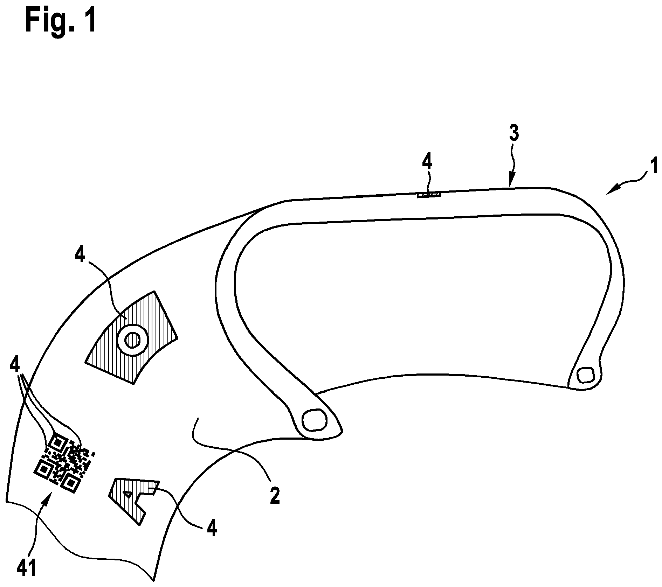

Die Figur 1 zeigt einen Fahrzeugluftreifen 1 mit Seitenwänden 2 und einem Laufstreifen 3 und mit zumindest einer Positivkontraststruktur 4 auf zumindest einer der Seitenwände 2 und/oder dem Laufstreifen 3. Bei einer Anordnung am Laufstreifen 3 kann die Positivkontraststruktur 4 dabei insbesondere auch auf Rillenflanken und/oder Rillengründen von im Laufstreifen 3 verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Der Reifen ist durch formgebende Vulkanisation eines Reifenrohlings mit einer Vulkanisationsvorrichtung aufweisend ein Formwerkzeug 5 mit einer zur Positivkontraststruktur 4 komplementären Negativkontraststruktur 6 auf einem Oberflächenbereich 7 einer Formoberfläche des Formwerkzeugs 5 hergestellt.

Eine derartige Positivkontraststruktur 4 eignen sich hervorragend zur Darstellung eines Codes 41, insbesondere eines zweidimensionalen Codes wie beispielsweise eines QR-Codes. Hierbei können die üblicherweise dunkel dargestellten Flächen des Codes die Positivkontraststruktur 4 aufweisend ausgebildet sein.

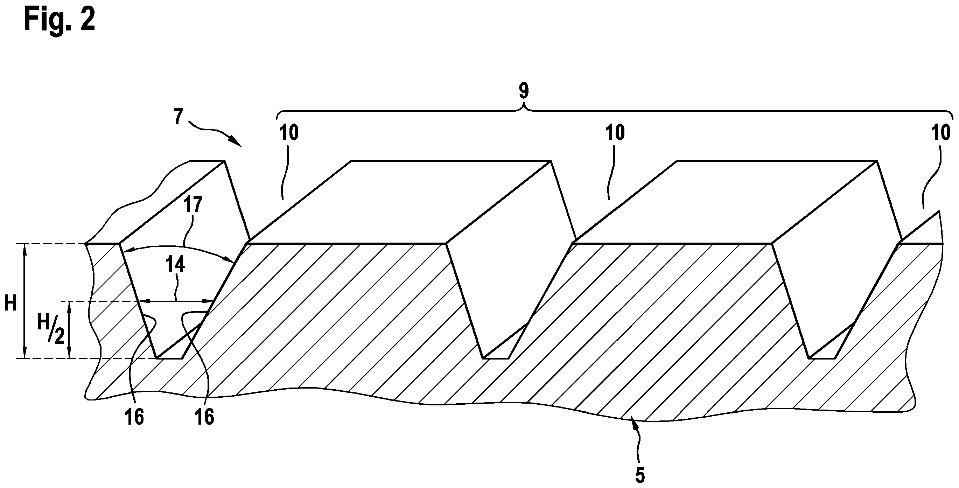

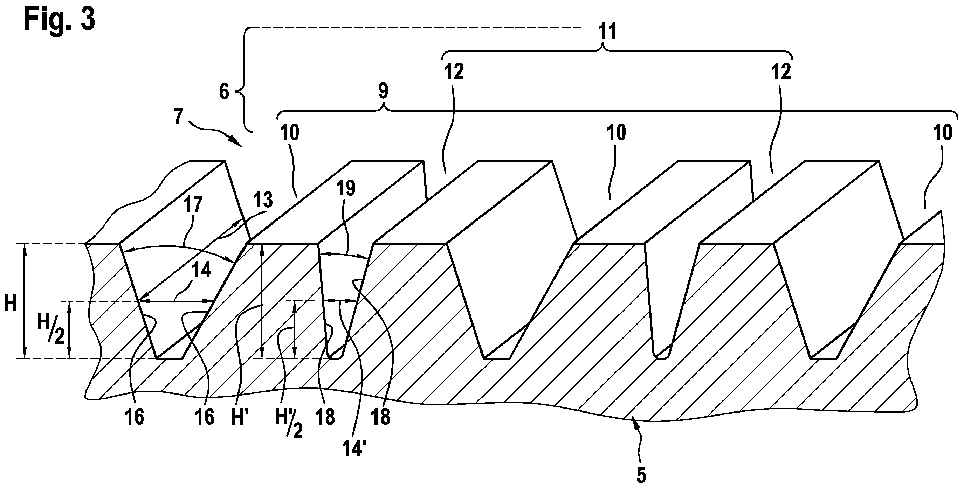

Die Figuren 2 und 3 dienen der Veranschaulichung der Herstellung eines zur formgebenden Vulkanisation geeigneten Formwerkzeugs 5.

Das Verfahren umfasst dabei die folgenden Schritte:
a) Bereitstellen des Formwerkzeugs 5 aufweisend die Formoberfläche zum formgebenden Prägen einer Oberfläche 2,3 eines Fahrzeugreifens 1 im Zuge der Vulkanisation des Reifens mittels der Vulkanisationsvorrichtung,
b) Erzeugen einer ersten Oberflächenstruktur 9 von ersten Vertiefungen 10 mittels eines spanabtragenden Verfahrens, wobei sich die erste Oberflächenstruktur 9 zumindest über einen Oberflächenbereich 7 der Formoberfläche erstreckt,
c) Erzeugen einer zweiten Struktur 11 von zweiten Vertiefungen 12 mittels Lasergravur, wobei sich die zweite Oberflächenstruktur 11 zumindest über den Oberflächenbereich 7 erstreckt und wobei die erste Oberflächenstruktur 9 und die zweite Oberflächenstruktur 11 zusammen im Oberflächenbereich 7 die Negativkontraststruktur 6 bilden.

Die Figuren 2 und 3 veranschaulichen das Verfahren, wenn Schritt b) vor Schritt c) erfolgt. Es kann aber auch zuerst Schritt c) und dann Schritt b) erfolgen.

Die Figur 2 zeigt eine Schnitt durch das Formwerkzeug 5 mit dem Oberflächenbereich 7 nach Schritt b). Die erste Oberflächenstruktur 9 von ersten Vertiefungen 10 ist bereits durch ein spanabtragendes Verfahren wie beispielsweise Fräsen erzeugt. Die erste Oberflächenstruktur 9 erstreckt sich dabei zumindest über den Oberflächenbereich 7.

In Schritt c) wird eine zweite Oberflächenstruktur 11 von zweiten Vertiefungen 12 mittels Lasergravur erzeugt. Die zweite Oberflächenstruktur 11 erstreckt sich dabei zumindest über den Oberflächenbereich 7, wodurch die erste Struktur 9 und die zweite Struktur 11 zusammen im Oberflächenbereich 7 die Negativkontraststruktur 6 bilden.

Die Figur 3 zeigt einen Schnitt durch das Formwerkzeug 5 mit dem Oberflächenbereich 7 nach Schritt c). Zusätzlich zu den ersten Vertiefungen 10 der durch das spanabtragende Verfahren erzeugten ersten Oberflächenstruktur 9 weist der Oberflächenbereich 7 nun auch die durch Lasergravur erzeugten zweiten Vertiefungen 12 des zweiten Oberflächenbereichs 11 auf. Die erste Oberflächenstruktur 9 und die zweite Oberflächenstruktur 11 bilden zusammen im Oberflächenbereich 7 die Negativkontraststruktur 6.

Die zweiten Vertiefungen 12 weisen eine Oberfläche 18 auf, die eine größere, bevorzugt um einen Faktor 10 größere, besonders bevorzugt um einen Faktor 20 größere, Rautiefe gemäß DIN EN ISO 4287:1998 aufweisen als eine Oberfläche 16 der ersten Vertiefungen 10.

Bevorzugt sind zuerst in Schritt b) alle ersten Vertiefungen 10 erzeugt worden und räumlich und/oder zeitlich davon beabstandet in einem nachgelagerten Schritt c) alle zweiten Vertiefungen 12 erzeugt worden. Die Mittel zum spanabtragenden Verfahren sowie zur Lasergravur können somit räumlich und/oder zeitlich beabstandet voneinander zum Einsatz kommen und müssen nicht miteinander in einer Apparatur kombiniert werden.

Wie in der Figur 2 dargestellt kann zumindest eine erste Vertiefung 10 eine längliche Form aufweisen. Bevorzugt weist die zumindest eine erste Vertiefung 10 dabei eine Länge 13 auf, die mindestens zweimal, besonders bevorzugt mindestens viermal, größer ist als die Breite 14 der zumindest einen ersten Vertiefung 10. In der Darstellung weisen alle ersten Vertiefungen 10 eine derartige längliche Form auf.

Die Breite 14 und die Länge 13 der ersten Vertiefung 10 kann ermittelt sein auf der Hälfte der Höhe H der Vertiefung. In der Darstellung

Wie in der Figur 3 dargestellt kann zumindest eine zweite Vertiefung 12 eine längliche Form aufweisen. Bevorzugt weist die zumindest eine zweite Vertiefung 12 dabei eine Länge 13 auf, die mindestens 2 mal, besonders bevorzugt mindestens 4 mal, größer ist als die Breite 14' der zumindest einen zweiten Vertiefung 12. In der Darstellung weisen alle zweiten Vertiefungen 12 eine derartige längliche Form auf.

Die Breite 14' und die Länge der zweiten Vertiefung 12 kann ermittelt sein auf der Hälfte der Höhe H' der Vertiefung.

In Schritt b) sind dabei mehrere erste längliche Vertiefung 10 und in Schritt c) mehrere zweite längliche Vertiefungen 12 erzeugt worden. Die ersten Vertiefungen 10 und die zweiten Vertiefungen 12 sind dabei weitgehend parallel zueinander, bevorzugt weitgehend parallel zueinander und alternierend, angeordnet erzeugt.

Wie dargestellt können die Vertiefungen 10, 12 weitgehend geradlinig ausgerichtet sein. Alternativ kann aber auch zumindest eine zweite Vertiefung 12 in ihrer länglichen Erstreckung eine Krümmung oder einen Knick aufweisen.

Die ersten Vertiefungen 10 und die zweiten Vertiefungen 12 können jeweils einander gegenüberliegende Flanken 16,18 aufweisen, die einen Winkel 17, 19 miteinander einschließen. Dabei können die Flanken 16, 18 jeweils den gleichen Winkel 17, 19 miteinander einschließe. Sie können sich aber auch darin unterscheiden. Wie dargestellt kann zumindest eine erste Vertiefung 10 einander gegenüberliegende Flanken 16 aufweisen, die einen Winkel 17 von mindestens 50°, bevorzugt von 55° bis 65°, miteinander einschließen und zumindest eine zweite Vertiefung 12 kann einander gegenüberliegende Flanken 18 aufweisen, die einen Winkel 19 von 4° bis 30°, bevorzugt von 10° bis 20°, besonders bevorzugt von 12° bis 16°, miteinander einschließen.

Die Höhe H der zumindest einen ersten Vertiefung 10 und/oder die Höhe H` der zumindest einen zweiten Vertiefung 12 kann maximal 0,8 mm, bevorzugt maximal 0,6 mm, besonders bevorzugt maximal 0,4 mm, betragen.

Die Höhe H, H` kann gemessen sein relativ zur unbearbeiteten Formoberfläche des Oberflächenbereichs des Formwerkzeugs vor Schritt b).

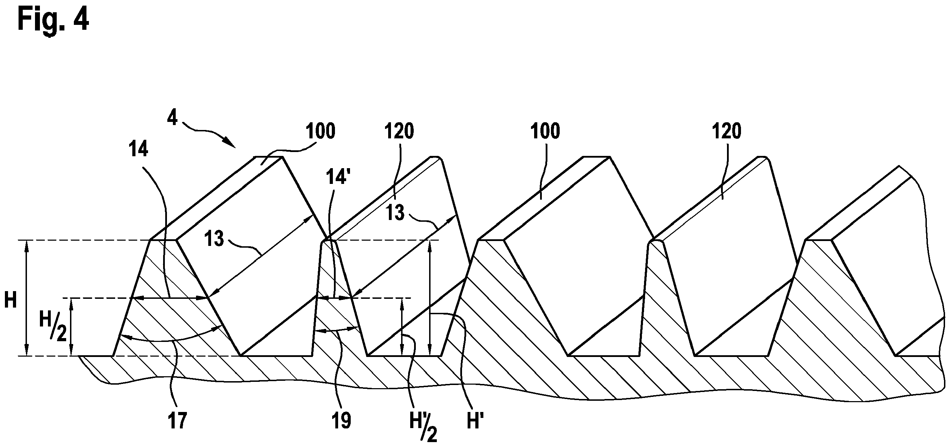

Die Figur 4 zeigt einen Schnitt durch einen Fahrzeugreifen 1 hergestellt durch formgebende Vulkanisation eines Reifenrohlings mit einer Vulkanisationsvorrichtung aufweisend das Formwerkzeug 5 mit einer Negativkontraststruktur 6 auf einem Oberflächenbereich 7 einer Formoberfläche des Formwerkzeugs hergestellt gemäß dem in den Figuren 2 und 3 erläuterten Verfahren. Der Fahrzeugreifen 1 weist auf seiner Oberfläche 2,3, die zur Negativkontraststruktur 6 komplementäre Positivkontraststruktur 4 auf. Die dargestellte Positivkontraststruktur 4 kann sich auf zumindest einer der Seitenwände 3 und/oder dem Laufstreifen 3 befinden. Es kann sich um den in der Figur 1 dargestellten Fahrzeugluftreifen 1 handeln.

Die ersten Vertiefungen 10 der Negativkontraststruktur 6 entsprechen dazu komplementären ersten Erhebungen 100 der Positivkontraststruktur 4. Die zweiten Vertiefungen 12 der Negativkontraststruktur 6 entsprechen dazu komplementären zweiten Erhebungen 120 der Positivkontraststruktur 4. Die dargestellte Positivkontraststruktur 4 entspricht einer Schraffur mit Schraffurrippen 100, 120. Die Abmessungen der Erhebungen 100, 120 entsprechen dabei weitgehend den Abmessungen der komplementären Vertiefungen 10, 12 der komplementären Negativkontraststruktur 6 und werden deshalb mit den gleichen Bezugszeichen H, H', 17, 19, 13, 14 wie die bei der entsprechenden Negativkontraststruktur 6 bezeichnet. Die zweiten Erhebungen 120 können eine Oberfläche aufweisen, die eine größere, bevorzugt um einen Faktor 10 größere, besonders bevorzugt um einen Faktor 20 größere, Rautiefe gemäß DIN EN ISO 4287:1998 aufweisen als eine Oberfläche der ersten Erhebungen 100.

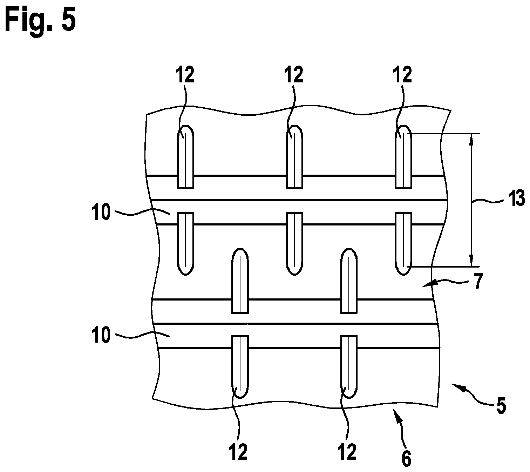

Die Figur 5 zeigt schematisch eine Draufsicht auf ein weiteres mittels des erfindungsgemäßen Verfahrens hergestelltes Formwerkzeug 5. Die Negativkontraststruktur 6 unterscheidet sich von der in der Figur 3 dargestellten Negativkontraststruktur 6 zumindest darin, dass zumindest eine erste längliche Vertiefung 10 und eine zweite längliche Vertiefung 12 einander kreuzend angeordnet sind. In der Darstellung weist die zweite längliche Vertiefung 12 eine geringere Höhe H' auf als die erste längliche Vertiefung 10.

Wurde dabei die zweite längliche Vertiefung 12 nach der ersten länglichen Vertiefung 10 erzeugt, so ist bei der Erzeugung zweiten länglichen Vertiefung 12 der Materialabtrag mittels Lasergravur nicht über die gesamte Länge 13 der zweiten länglichen Vertiefung 12 erfolgt, sondern im Kreuzungsbereich durch die bereits zuvor erzeugte erste längliche Vertiefung 10 unterbrochen war. Die zweite längliche Vertiefung 12 kann somit eine Unterbrechung aufweisen.

Die zumindest eine zweite Vertiefung 12 kann dabei eine Länge 13 aufweisen, die geringer ist als zweimal die Höhe H' der zweiten Vertiefung 12. Die Länge kann dabei gemessen sein auf der halben Höhe H' der zweiten Vertiefung.

### Bezugszeichenliste

### (Teil der Beschreibung)

1 Fahrzeugluftreifen
2 Seitenwand
3 Laufstreifen
4 Positivkontraststruktur
41 zweidimensionaler Code
5 Formwerkzeug
6 Negativkontraststruktur
7 Oberflächenbereich der Formoberfläche des Formwerkzeugs
9 erste Oberflächenstruktur
10 erste Vertiefung
11 zweite Oberflächenstruktur
12 zweite Vertiefung
13 Länge
16, 18 Flanken
17, 19 Winkel
14, 14' Breite
100 erste Erhebung
120 zweite Erhebung
H, H' Höhe

## Patentansprüche

1. Verfahren zur Herstellung eines Formwerkzeugs (5) einer Vulkanisationsvorrichtung zum formgebenden Vulkanisieren eines Fahrzeugreifens (1), wobei das Formwerkzeug (5) eine Negativkontraststruktur (6) auf einer Formoberfläche des Formwerkzeugs (5) aufweist, wobei das Verfahren zumindest die folgenden Schritte umfasst:
a) Bereitstellen des Formwerkzeugs (5) aufweisend die Formoberfläche zum formgebenden Prägen einer Oberfläche (2,3) eines Fahrzeugreifens (1) im Zuge der Vulkanisation des Reifens mittels der Vulkanisationsvorrichtung,
b) Erzeugen einer ersten Oberflächenstruktur (9) von ersten Vertiefungen (10) mittels eines spanabtragenden Verfahrens, wobei sich die erste Oberflächenstruktur (9) zumindest über einen Oberflächenbereich (7) der Formoberfläche erstreckt,
c) Erzeugen einer zweiten Oberflächenstruktur (11) von zweiten Vertiefungen (12) mittels Lasergravur, wobei sich die zweite Struktur (11) zumindest über den Oberflächenbereich (7) erstreckt und wobei die erste Oberflächenstruktur (9) und die zweite Oberflächenstruktur (11) zusammen im Oberflächenbereich (7) die Negativkontraststruktur (6) bilden,
**dadurch gekennzeichnet, dass**
die zweiten Vertiefungen (12) eine Oberfläche (18) aufweisen, die eine größere Rautiefe aufweisen als eine Oberfläche (16) der ersten Vertiefungen (10).

2. Verfahren nach Anspruch 1, **dadurch gekennzeichnet, dass** in Schritt b) alle ersten Vertiefungen (10) erzeugt werden und zeitlich und/oder räumlich beabstandet in Schritt c) alle zweiten Vertiefungen (12) erzeugt werden.

3. Verfahren nach zumindest einem der vorhergehenden Ansprüche, **dadurch gekennzeichnet, dass** die zweiten Vertiefungen (12) eine Oberfläche (18) aufweisen, die eine um einen Faktor 10 größere, bevorzugt um einen Faktor 20 größere, Rautiefe aufweisen als eine Oberfläche (16) der ersten Vertiefungen (10).

4. Verfahren nach zumindest einem der vorhergehenden Ansprüche, **dadurch gekennzeichnet, dass** zumindest eine erste Vertiefung (10) eine längliche Form aufweist, bevorzugt dass zumindest eine erste Vertiefung (10) eine Länge (13) aufweist, die mindestens zweimal, besonders bevorzugt mindestens viermal, größer ist als die Breite (14) der zumindest einen ersten Vertiefung (10).

5. Verfahren nach zumindest einem der vorhergehenden Ansprüche, **dadurch gekennzeichnet, dass** zumindest eine zweite Vertiefung (12) eine längliche Form aufweist, bevorzugt dass zumindest eine zweite Vertiefung (12) eine Länge aufweist, die mindestens 2 mal, besonders bevorzugt mindestens 4 mal, größer ist als die Breite (14') der zumindest einen zweiten Vertiefung (12).

6. Verfahren nach zumindest einem der vorhergehenden Ansprüche, **dadurch gekennzeichnet, dass** die erste Struktur (9) mehrere erste längliche Vertiefung (10) und die zweite Struktur (11) mehrere zweite längliche Vertiefungen (12) aufweist und dass die ersten Vertiefungen (10) und die zweiten Vertiefungen (12) dabei parallel zueinander, bevorzugt parallel zueinander und alternierend, angeordnet sind.

7. Verfahren nach zumindest einem der vorhergehenden Ansprüche, **dadurch gekennzeichnet, dass** zumindest eine erste längliche Vertiefung (10) und eine zweite längliche Vertiefung (12) einander kreuzend angeordnet sind.

8. Verfahren nach zumindest einem der vorhergehenden Ansprüche, **dadurch gekennzeichnet, dass** zumindest eine zweite Vertiefung (12) eine Länge (13) aufweist, die geringer ist als zweimal die Höhe (H') der zweiten Vertiefung (12).

9. Verfahren nach zumindest einem der vorhergehenden Ansprüche, **dadurch gekennzeichnet, dass** zumindest eine zweite Vertiefung (12) in ihrer länglichen Erstreckung eine Krümmung oder einen Knick aufweist.

10. Verfahren nach zumindest einem der vorhergehenden Ansprüche, **dadurch gekennzeichnet, dass** zumindest eine erste Vertiefung (10) einander gegenüberliegende Flanken (16) aufweist, die einen Winkel (17) von mindestens 50°, bevorzugt von 55° bis 65°, miteinander einschließen und dass zumindest eine zweite Vertiefung (12) einander gegenüberliegende Flanken (18) aufweist, die einen Winkel (19) von 4° bis 30°, bevorzugt von 10° bis 20°, besonders bevorzugt von 12° bis 16°, miteinander einschließen.

11. Verfahren nach zumindest einem der vorhergehenden Ansprüche, **dadurch gekennzeichnet, dass** die Höhe (H) der zumindest einen ersten Vertiefung (10) und/oder die Höhe (H') der zumindest einen zweiten Vertiefung (12) maximal 0,8 mm, bevorzugt maximal 0,6 mm, besonders bevorzugt maximal 0,4 mm, beträgt.

12. Fahrzeugreifen (1) hergestellt durch formgebende Vulkanisation eines Reifenrohlings mit einer Vulkanisationsvorrichtung aufweisend ein Formwerkzeug (5) mit einer Negativkontraststruktur (6) auf einem Oberflächenbereich (7) einer Formoberfläche des Formwerkzeugs hergestellt gemäß zumindest einem der Ansprüche 1 bis 11, wobei der Fahrzeugreifen (1) auf seiner Oberfläche (2,3), insbesondere auf zumindest einer Seitenwand (2) und/oder dem Laufstreifen (3), die zur Negativkontraststruktur (6) komplementäre Positivkontraststruktur (4) aufweist.

13. Fahrzeugreifen (1) gemäß Anspruch 12, **dadurch gekennzeichnet, dass** der Fahrzeugreifen mehrere Flächen aufweisend die Positivkontraststruktur (4) aufweist, wobei die Flächen derart angeordnet sind, dass sie einen maschinenlesbaren Code (41), bevorzugt einen zweidimensionalen Code (41), besonders bevorzugt einen QR-Code (41), darstellen.

## Claims

1. Method for producing a moulding tool (5) of a vulcanization device for the moulding vulcanization of a vehicle tyre (1), wherein the moulding tool (5) has a negative contrast structure (6) on a moulding surface of the moulding tool (5), wherein the method comprises at least the following steps:
a) providing the moulding tool (5) having the moulding surface for the stamping of a surface (2, 3) of a vehicle tyre (1) in a moulding manner in the course of the vulcanization of the tyre by means of the vulcanization device,
b) creating a first surface structure (9) of first depressions (10) by means of a machining process, wherein the first surface structure (9) extends at least over a surface region (7) of the moulding surface,
c) creating a second surface structure (11) of second depressions (12) by means of laser engraving, wherein the second structure (11) extends at least over the surface region (7) and wherein the first surface structure (9) and the second surface structure (11) together form the negative contrast structure (6) in the surface region (7),
**characterized in that**
the second depressions (12) have a surface (18) which has a greater surface roughness than a surface (16) of the first depressions (10).

2. Method according to Claim 1, **characterized in that** all of the first depressions (10) are created in step b) and all of the second depressions (12) are created at a separate time and/or in a separate location in step c).

3. Method according to at least one of the preceding claims, **characterized in that** the second depressions (12) have a surface (18) which has a surface roughness greater by a factor of 10, preferably greater by a factor of 20, than a surface (16) of the first depressions (10).

4. Method according to at least one of the preceding claims, **characterized in that** at least one first depression (10) has an elongated shape, preferably **in that** at least one first depression (10) has a length (13) that is at least twice, particularly preferably at least four times, greater than the width (14) of the at least one first depression (10).

5. Method according to at least one of the preceding claims, **characterized in that** at least one second depression (12) has an elongated shape, preferably **in that** at least one second depression (12) has a length which is at least 2 times, particularly preferably at least 4 times, greater than the width (14') of the at least one second depression (12).

6. Method according to at least one of the preceding claims, **characterized in that** the first structure (9) has a number of first elongated depressions (10) and the second structure (11) has a number of second elongated depressions (12) and **in that** the first depressions (10) and the second depressions (12) are arranged parallel to one another, preferably parallel to one another and alternating.

7. Method according to at least one of the preceding claims, **characterized in that** at least one first elongated depression (10) and one second elongated depression (12) are arranged so as to cross one another.

8. Method according to at least one of the preceding claims, **characterized in that** at least one second depression (12) has a length (13) which is less than twice the height (H') of the second depression (12).

9. Method according to at least one of the preceding claims, **characterized in that** at least one second depression (12) has a curvature or a kink in its longitudinal extent.

10. Method according to at least one of the preceding claims, **characterized in that** at least one first depression (10) has mutually opposite flanks (16) which enclose an angle (17) of at least 50°, preferably of 55° to 65°, with one another and **in that** at least one second depression (12) has mutually opposite flanks (18) which enclose an angle (19) of 4° to 30°, preferably of 10° to 20°, particularly preferably of 12° to 16°, with one another.

11. Method according to at least one of the preceding claims, **characterized in that** the height (H) of the at least one first depression (10) and/or the height (H') of the at least one second depression (12) is a maximum of 0.8 mm, preferably a maximum of 0.6 mm, particularly preferably a maximum of 0.4 mm.

12. Vehicle tyre (1) produced by moulding vulcanization of a green tyre with a vulcanization device having a moulding tool (5) with a negative contrast structure (6) on a surface region (7) of a moulding surface of the moulding tool produced according to at least one of Claims 1 to 11, wherein the vehicle tyre (1) has on its surface (2, 3), in particular on at least one sidewall (2) and/or the tread (3), the positive contrast structure (4) complementing the negative contrast structure (6).

13. Vehicle tyre (1) according to Claim 12, **characterized in that** the vehicle tyre has a number of surfaces having the positive contrast structure (4), wherein the surfaces are arranged in such a way that they depict a machine-readable code (41), preferably a two-dimensional code (41), particularly preferably a QR code (41).

## Revendications

1. Procédé de fabrication d'un outil de moulage (5) d'un dispositif de vulcanisation destiné à la vulcanisation par moulage d'un pneu de véhicule (1), l'outil de moulage (5) présentant une structure de contraste négative (6) sur une surface de moulage de l'outil de moulage (5), le procédé comprenant au moins les étapes suivantes :
a) mise à disposition de l'outil de moulage (5) présentant la surface de moulage pour l'estampage de moulage d'une surface (2, 3) d'un pneu de véhicule (1) au cours de la vulcanisation du pneu au moyen du dispositif de vulcanisation,
b) génération d'une première structure de surface (9) de premières cavités (10) au moyen d'un procédé d'enlèvement de copeaux, la première structure de surface (9) s'étendant au moins sur une zone de surface (7) de la surface de moulage,
c) génération d'une deuxième structure de surface (11) de deuxièmes cavités (12) au moyen d'une gravure au laser, la deuxième structure (11) s'étendant au moins sur la zone de surface (7) et la première structure de surface (9) et la deuxième structure de surface (11) formant ensemble la structure de contraste négative (6) dans la zone de surface (7),
**caractérisé en ce que**
les deuxièmes cavités (12) possèdent une surface (18) qui présente une profondeur de rugosité supérieure à une surface (16) des premières cavités (10).

2. Procédé selon la revendication 1, **caractérisé en ce que** toutes les premières cavités (10) sont générées à l'étape b) et toutes les deuxièmes cavités (12) sont générées à l'étape c) de manière espacée dans le temps et/ou dans l'espace.

3. Procédé selon au moins l'une des revendications précédentes, **caractérisé en ce que** les deuxièmes cavités (12) possèdent une surface (18) qui présente une profondeur de rugosité supérieure d'un facteur 10, de préférence d'un facteur 20, à une surface (16) des premières cavités (10).

4. Procédé selon au moins l'une des revendications précédentes, **caractérisé en ce qu'**au moins une première cavité (10) présente une forme allongée, de préférence **en ce qu'**au moins une première cavité (10) présente une longueur (13) qui est au moins deux fois, de manière particulièrement préférée au moins quatre fois, supérieure à la largeur (14) de ladite au moins une première cavité (10).

5. Procédé selon au moins l'une des revendications précédentes, **caractérisé en ce qu'**au moins une deuxième cavité (12) présente une forme allongée, de préférence **en ce qu'**au moins une deuxième cavité (12) présente une longueur qui est au moins 2 fois, de manière particulièrement préférée au moins 4 fois, supérieure à la largeur (14') de ladite au moins une deuxième cavité (12).

6. Procédé selon au moins l'une des revendications précédentes, **caractérisé en ce que** la première structure (9) possède plusieurs premières cavités allongées (10) et la deuxième structure (11) plusieurs deuxièmes cavités allongées (12), et **en ce que** les premières cavités (10) et les deuxièmes cavités (12) sont ici disposées parallèlement les unes aux autres, de préférence parallèlement les unes aux autres et en alternance.

7. Procédé selon au moins l'une des revendications précédentes, **caractérisé en ce qu'**au moins une première cavité allongée (10) et une deuxième cavité allongée (12) sont disposées de manière à se croiser mutuellement.

8. Procédé selon au moins l'une des revendications précédentes, **caractérisé en ce qu'**au moins une deuxième cavité (12) présente une longueur (13) inférieure à deux fois la hauteur (H') de la deuxième cavité (12).

9. Procédé selon au moins l'une des revendications précédentes, **caractérisé en ce qu'**au moins une deuxième cavité (12) présente une courbure ou un coude dans son extension longitudinale.

10. Procédé selon au moins l'une des revendications précédentes, **caractérisé en ce qu'**au moins une première cavité (10) présente des flancs (16) opposés l'un à l'autre qui forment entre eux un angle (17) d'au moins 50°, de préférence de 55° à 65°, et **en ce qu'**au moins une deuxième cavité (12) présente des flancs (18) opposés l'un à l'autre qui forment entre eux un angle (19) de 4° à 30°, de préférence de 10° à 20°, plus préférentiellement de 12° à 16°.

11. Procédé selon au moins l'une des revendications précédentes, **caractérisé en ce que** la hauteur (H) de l'au moins une première cavité (10) et/ou la hauteur (H') de l'au moins une deuxième cavité (12) est au maximum de 0,8 mm, de préférence au maximum de 0,6 mm, de manière particulièrement préférée au maximum de 0,4 mm.

12. Pneu de véhicule (1) fabriqué par vulcanisation par moulage d'une ébauche de pneu avec un dispositif de vulcanisation qui possède un outil de moulage (5) ayant une structure de contraste négative (6) sur une zone de surface (7) d'une surface de moulage de l'outil de moulage fabriqué selon au moins l'une des revendications 1 à 11, le pneu de véhicule (1) présentant sur sa surface (2, 3), en particulier sur au moins une paroi latérale (2) et/ou la bande de roulement (3), la structure de contraste positive (4) complémentaire à la structure de contraste négative (6).

13. Pneu de véhicule (1) selon la revendication 12, **caractérisé en ce que** le pneu de véhicule possède plusieurs surfaces présentant la structure de contraste positif (4), les surfaces étant disposées de telle sorte qu'elles représentent un code (41) lisible par machine, de préférence un code bidimensionnel (41), de manière particulièrement préférée un code QR (41).
